(19) Europäisches Patentamt
European Patent Office
Office européen des brevets

(11) **EP 3 407 039 B1**

(12) **EUROPÄISCHE PATENTSCHRIFT**

(45) Veröffentlichungstag und Bekanntmachung des Hinweises auf die Patenterteilung:
**16.10.2019   Patentblatt 2019/42**

(51) Int Cl.:
*G01J 3/50* *(2006.01)*       *G01J 3/02* *(2006.01)*
*G01J 3/28* *(2006.01)*       *G01J 3/51* *(2006.01)*

(21) Anmeldenummer: **18000050.7**

(22) Anmeldetag: **23.01.2018**

(54) **FARBERFASSUNGSANORDNUNG UND KORREKTURVERFAHREN UNTER VERWENDUNG DER FARBERFASSUNGSANORDNUNG**

COLOUR DETECTING ARRANGEMENT AND CORRECTION METHOD USING THE COLOUR DETECTING ARRANGEMENT

DISPOSITIF DE DÉTECTION DE COULEUR ET PROCÉDÉ DE CORRECTION À L'AIDE DUDIT DISPOSITIF DE DÉTECTION DE COULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2017   DE 102017003703**

(43) Veröffentlichungstag der Anmeldung:
**28.11.2018   Patentblatt 2018/48**

(73) Patentinhaber: **SensoPart Industriesensorik GmbH**
**79695 Wieden (DE)**

(72) Erfinder:
• **Kemmler, Manfred**
  **79279 Vörstetten (DE)**
• **Weiß, Robert**
  **79100 Freiburg (DE)**
• **Trüper, Dirk**
  **67320 Schoenbourg (FR)**

(74) Vertreter: **Drobnik, Stefanie**
**mepat Patentanwälte**
**Eisenlohrstraße 31**
**76135 Karlsruhe (DE)**

(56) Entgegenhaltungen:
DE-A1-102012 107 046       US-A- 5 831 740
US-A1- 2004 222 362       US-A1- 2012 188 419

EP 3 407 039 B1

**Beschreibung**

Die Erfindung betrifft eine Farberfassungsanordnung zum Bestimmen zumindest einer Farbe eines Objekts und ein Korrekturverfahren zur Korrektur einer erfassten Helligkeit des Objekts unter Verwendung der Farberfassungsanordnung.

Aus dem Stand der Technik sind Farbmesseinrichtungen bekannt, mit denen Farben bspw. von produzierten Gütern getestet werden können. Die Sensorik dieser Messeinrichtungen bestimmen u. a. die Farbanteile des empfangenen Lichtes. Um eine Farbe zu erkennen bzw. sie wieder zu erkennen, muss neben den Farbanteilen (RGB) auch die Helligkeit bestimmt werden. Die gemessene Helligkeit ist dabei abhängig vom Abstand des farbigen Objekts zum Sensor, womit für verschiedene Abstände unterschiedliche Helligkeiten gemessen werden können. So kann sich bspw. ein Braunfarbton nur durch die Helligkeit, nicht aber durch die Farbanteile von Gelbtönen unterscheiden.

Da die gemessene Helligkeit aber stark vom Abstand des Objektes abhängt, ist die Wiedererkennung nur in einem kleinen Abstandsbereich möglich. In einem größeren Abstandsbereich ist die Erfassung somit zu ungenau. Zusätzlich zu dem Farberkennungssensor könnte eine spezielle Abstandsmesseinrichtung verwendet werden, um die gemessene Helligkeit mit der bekannten Abhängigkeit vom Abstand zu korrigieren. Dieses Verfahren ist allerdings aufwändig und die benötigten Farbmesseinrichtungen sind teuer.

Farbsensoren mit trichterförmigen Lichtleitelementen sind bekannt aus der US2012/0188419 A1. Weiterhin offenbaren die US 2004/222362 A1 sowie die US 5,831,740 spektroskopische Geräte mit Abstands- bzw. Positionsbestimmung.

Ausgehend vom Stand der Technik ist es Aufgabe der vorliegenden Erfindung, eine verbesserte Farberfassungsanordnung zum Bestimmen einer Farbe eines Objekts bereitzustellen, die einfach aufgebaut und kostengünstig ist.

Diese Aufgabe wird durch eine Farberfassungsanordnung mit den Merkmalen des Anspruchs 1 gelöst.

Die weitere Aufgabe, die Helligkeit und damit die Farbe eines Objekts unabhängig eines Abstandsbereichs zu erkennen und die Farberkennung durch eine Farberfassungsanordnung zu verbessern, wird durch das Korrekturverfahren mit den Merkmalen des unabhängigen Anspruchs 8 gelöst.

Weiterbildungen der Farberfassungsanordnung und des Korrekturverfahrens sind in den jeweiligen Unteransprüchen ausgeführt.

Eine erfindungsgemäße Farberfassungsanordnung dient zum Bestimmen einer oder mehrerer Farben eines Objekts. Die Anordnung weist dazu auf:- eine gerichtete Lichtquelle, die auf das zu erkennende Objekt gerichtet ist,- eine Auswerteelektronik, und- eine Farberfassungseinrichtung mit drei oder mehr Farberkennungssensoren zur Aufnahme von Strahlung, die von dem Objekt reflektiert wird. Erfindungsgemäß ist jedem Farbsensor ein Trichter als lichtleitendes Element vorgeordnet. Ferner werden zumindest zwei der Farberkennungssensoren als Abstandssensor verwendet.

Mittels dieser Anordnung kann der Abstand über zwei Trichter einer bereits vorhandenen 4x3 Trichtermatrix bestimmt werden, wobei das Abstandsignal zur Kompensation des Helligkeitssignals (Empfangsenergie pro Farbkanal) verwendet werden kann. Zur Normierung kann bspw. die empfangene Gesamtenergie zum Einsatz kommen.

Die Farberkennungssensoren bilden mit den Trichtern eine Einheit und sind in einer möglichen Ausführungsform als Sensor-Matrix mit vier Spalten und drei Reihen angeordnet. Erfindungsgemäß werden zwei der Farberkennungssensoren als Abstandssensoren verwendet. Dazu ist eine Spalte der Sensor-Matrix für die Abstandmessung vorgesehen, in einer Ausführungsform der Farberfassungseinrichtung ist es bspw. die erste Spalte. Ferner liegen ein oberer, erster Trichter und ein unterer, zweiter Trichter in der Spalte vor. Die von diesen beiden Trichtern aufgenommenen und von dem Objekt reflektierten Lichtstrahlen werden auf die als Abstandssensoren genutzten Farberkennungssensoren geleitet. Dabei haben die Intensitäten der von den beiden Trichtern aufgenommenen Lichtstrahlen, aufgrund der unterschiedlichen Anordnung, eine unterschiedliche Abhängigkeit vom Abstand des Objektes. Der unterschiedliche Abstand zu dem Objekt, dem Sender, ist hierbei imminent, die Spaltenlage der Trichter ist dabei beliebig und nicht fest. In einer Ausführungsform kann bei einer dreireihigen Spalte der obere Trichter und der untere Trichter verwendet werden - der mittlere der drei Trichter wird nicht verwendet, bzw. hat keinen zugeordneten Sensor.

Die Erfindung kann vorsehen, dass jeder Trichter pyramidenstumpfförmig ist, wobei die Austrittsfläche einer Deckfläche und eine Eintrittsfläche des Trichters einer Grundfläche des Pyramidenstumpfes entsprechen. Der Pyramidenstumpf weist bevorzugt eine quadratische Grundfläche auf. Alternativ kann die Grundfläche auch dreieckig oder vieleckig mit mehr als vier Ecken sein. Diese geometrischen Formen erzeugen eine Lichtkonzentration und haben keine Linsenwirkung. Bei nichtsegmentierten Empfängern kann in bestimmten Einzelanordnungen auch eine Kegelform als Grundform Verwendung finden, wobei Grund- und Deckfläche jeweils kreisförmig sind. Zur Erläuterung der Funktionsweise der Trichter wird auf die DE 100 16 349 B4 vollumfänglich Bezug genommen.

Vorteilhaft kann jeder Trichter als lichtleitendes Element linsenfrei sein, so dass die in jeden Trichter einfallende Strahlung bzw. das Licht maximal n-mal mit n ≤ 2 reflektiert wird. Jeder Trichter dient dabei als nichtabbildender Konzentrator vor jedem Farberkennungssensor.

Auch kann vorgesehen sein, dass die Trichter aus einem lichtdurchlässigen Vollmaterial, bevorzugt aus Glas oder synthetischem Quarzglas, bestehen. Alternativ kann ein Kunststoff, wie Acrylglas (Polymethylmethacrylat), aber auch Polycarbonat verwendet werden. Ebenfalls kommen andere transparente Kunststoffe wie Polyetherimid oder Polysulfon in Frage. Ein einzelner Trichter ist dabei bedingt durch das geringe Volumen einfach und kostengünstig herzustellen, z. B. im Spritzgussverfahren.

Die Erfindung kann vorsehen, dass jeder Farberkennungssensor eine oder mehrere monochrome Farbaufnahmeflächen aufweist, wobei die Farbaufnahmefläche RGB-sensitiv sein kann, d. h. insbesondere rot-, grün- oder blausensitiv. Alternativ können die Farbaufnahmeflächen auch CMY-sensitiv, insbesondere cyan-, magenta-, gelbsensitiv sein. So können in der Farberfassungseinrichtung verschiedene Farbstandards verwendet werden. Dabei können die Farbaufnahmeflächen des Farberkennungssensors in einer Ausführungsform der Erfindung Fotodioden sein, denen ein Farbfilter vorgeordnet ist. Auch können andere Sensortypen in der erfindungsgemäßen Erfindung Verwendung finden, die einzelne, monochrome Farbaufnahmeflächen realisieren. Die Farberkennung kann auch mittels dreier befilterter Fotodioden erfolgen. Es können auch mehr als drei Fotodioden verwendet werden, um bessere und mehr Signale zu erhalten, wobei auch eine Art gedoppelt werden kann.

Zur Optimierung der Abstandskennlinie, bzw. zur Erhöhung der unterschiedlichen Intensitätsabhängigkeit vom Abstand kann ein Grauverlaufsfilter verwendet werden, der die abstandsspezifische unterschiedliche Abschattung der Nah- und Fernbereichsmessdioden verstärkt. Den zur Abstandsmessung vorgesehenen Farberkennungssensoren kann hierzu in einer Ausführungsform der Farberfassungsanordnung der Grauverlaufsfilter sein. Der Grauverlaufsfilter kann dabei so angeordnet sein, dass er einen unteren Abschnitt (bspw. ein unteres Drittel) des oberen, ersten Farbrichters und gleichzeitig einen oberen Abschnitt (bspw. ein oberes Drittel) des zweiten, unteren Farbrichters abdeckt. In einer weiteren Ausführungsform der Erfindung kann der Grauverlaufsfilter unterschiedliche Formen haben, so zum Beispiel einen Verlaufsgradienten, ein Streifenmuster, ein Zackenmuster oder auch ein Raster aus Punkten mit variablen Abständen. Weitere Möglichkeiten wären beispielsweise Verlaufsfilter mit einer variablen Transmission oder die Verwendung eines Aufdruckes mit geeigneten Geometrien zur partiellen Abschattung der Nahbzw. Fernbereichssensoren. In einer Ausführungsform ist der Grauverlaufsfilter an der Lichteintrittsfläche, also vor dem Trichter angeordnet.

Die Farberfassungsanordnung kann so gestaltet werden, dass sie flexibel an die jeweiligen Anforderungen angepasst werden kann. So können neben farbsensitiven Photodioden als Farberkennungssensoren auch herkömmliche Fotoempfänger verwendet werden und mit einem Farbfilter versehen sein. Alle Trichter konzentrieren das Licht auf die gleiche Weise auf die Farbaufnahmefläche und ermöglichen das gleiche Abschattungsverhalten für alle Farbaufnahmeflächen. Das Rauschverhalten dieser einzelnen Farbsensoren ist aufgrund der kleineren Empfangsfläche kleiner oder gleich dem Rauschverhalten einer Farberfassungseinrichtung gesamt.

Um Farben von Objekten oder farbcharakteristische Eigenschaften oder Parameter exakt aufnehmen zu können, kann die Erfindung vorsehen, dass die Lichtquelle weißes Licht emittiert. Dabei kann die Lichtquelle eine Laseranordnung aus je einem blauen, roten und grünen Laser oder auch eine LED, LED-Anordnung oder eine andere gerichtete Lichtquelle sein.

Bei einem Korrekturverfahren zur Korrektur einer erfassten Helligkeit des Objekts wird eine erfindungsgemäße Farberfassungsanordnung verwendet. Das Verfahrens wird folgendermaßen durchgeführt:

- das Objekt wird mit Lichtstrahlen aus der Lichtquelle bestrahlt, wobei die Lichtstrahlen in Bezug zur Lichtquelle auf eine oder mehrere Position(en) des Objekts auftreffen; dabei kann das Objekt verschiedene Abstände zur Farberfassungsanordnung haben;
- die Helligkeit an der Position des Objekts wird bestimmt, indem die Intensität der von dem Objekt reflektierten Lichtstrahlen mit den Farberkennungssensoren erfasst wird und die Informationen der drei Farbanteile und der beiden zur Abstandmessung dienenden Empfängerintensitäten A1, A2 an die Auswerteelektronik übermittelt wird;
- das Differenzsignal ∆A der Signale A1 und A2 wird gebildet und mit der Gesamtempfangsenergie der Abstandssensoren mittels der Auswerteelektronik normiert und ein Korrekturfaktor für die Helligkeit bestimmt;
- und schließlich die Helligkeit durch den Korrekturfaktor aus dem normierten Differenzsignal bestimmt wird.

Unter dem Begriff eines Abstandssignals wird das Signal verstanden, das mittels der Farberkennungssensoren gemessen wird, die für die Abstandsmessung verwendet werden. Die Farberfassungseinrichtung weist bspw. als Empfangseinheit eine 4x3 Matrix aus Farberkennungssensoren bzw. Farbempfängern mit ebenso vielen vorgeordneten Trichtern auf. Eine 3x3 Untermatrix wird dabei mit neun Farbempfängern ausgestattet (3xR, 3xG, 3xB). In der verbleibenden 1x3 Matrix können nun die Trichter am Rand (nah am Sender und fern vom Sender) benutzt werden, um das abstandsabhängige Differenzsignal zu erzeugen. Nah und fern bedeutet dabei der seitliche Abstand an der Austrittsfläche der Sensoranordnung - durch diesen unterschiedlichen Abstand erhält man eine unterschiedliche Abstandsabhängigkeit der gemessenen Intensität. Vorteilhaft werden Farberkennungssensoren dazu verwendet, den Abstand zum Objekt zu bestimmen und dieser Messwert für die Korrektur der empfangenen Helligkeit benutzt. Im Prinzip wird der Abstand aus dem Differenzsignal zweier Photodioden ermittelt:

$$\Delta A' = A1 - A2.$$

Dadurch, dass unterschiedliche Abstände zu dem zu vermessenden Objekt aufgrund unterschiedlicher Positionen auf dem Objekt selbst vorliegen, haben die beiden Trichter ein unterschiedliches Sichtfeld, somit ändert sich die empfangene Lichtintensität bei Änderung des Abstandes, analog zur Abstandsmessung per Triangulation. Da sich die Differenz der beiden Signale linear mit der Objekthelligkeit ändert, muss das Differenzsignal mit der Gesamtempfangsenergie der Abstandssensoren normiert werden:

$$\Delta A_{ges} = \Delta A' / (A1 + A2).$$

Dieses Funktionsprinzip entspricht der bekannten Triangulations-Abstandsmessung mittels Differenzdiode.

Um den Korrekturwert einfach zu bestimmen, kann das erfindungsgemäße Verfahren vorsehen, dass das normierte Differenzsignal mit einem Datensatz oder mehreren vorbestimmten Datensätzen verglichen wird. Daraus kann dann der Korrekturfaktor ermittelt werden, wobei aus dem Signal die Empfangsenergie pro Farbkanal ermittelt und mit vorbestimmten Datensätzen verglichen wird, wie bspw. einer geeigneten Look-Up-Tabelle.

Dies hat insbesondere den Vorteil, dass die Helligkeit des Objektes oder eines bestimmten Punktes auf dem Objekt über einen großen Abstandsbereich bestimmt werden kann. Dadurch lässt sich sehr einfach und effektiv eine Farbe eines Objekts erfassen und korrekt bestimmen.

Eine weitere Ausführungsform der Anordnung kann vorsehen, dass das Differenzsignal analog erzeugt wird und mittels eines A/D-Wandlers das analoge Signal in ein digitales Signal gewandelt wird. Alternativ kann vorgesehen sein, dass mittels der Abstandssensoren analoge Signale erfasst werden und mittels des A/D-Wandlers die analogen Signale in digitale Signale gewandelt werden. Eine zugehörige Datenverarbeitungseinheit, wie ein Microcontroller o. ä. kann der Anordnung zugeordnet sein, Teil von ihr sein oder an sie angeschlossen werden. Eine schnelle und einfache Datenauswertung der digitalisierten Signale kann damit vorgenommen werden.

Weitere Ausführungsformen der Anordnung und des Verfahrens sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:

Fig. 1 eine schematische Ansicht der Farberfassungsanordnung,

Fig. 2 eine schematische Perspektivansicht der Farberfassungseinrichtung mit Grauverlaufsfilter,

Fig. 3 eine schematische Vorderansicht der Farberfassungseinrichtung mit Grauverlaufsfilter,

Fig. 4 schematische Ansichten verschiedener Grauverlaufsfilter, und

Fig. 5 ein schematisches Diagramm gemessener Signale aufgetragen über dem Abstand Sensor-Objekt.

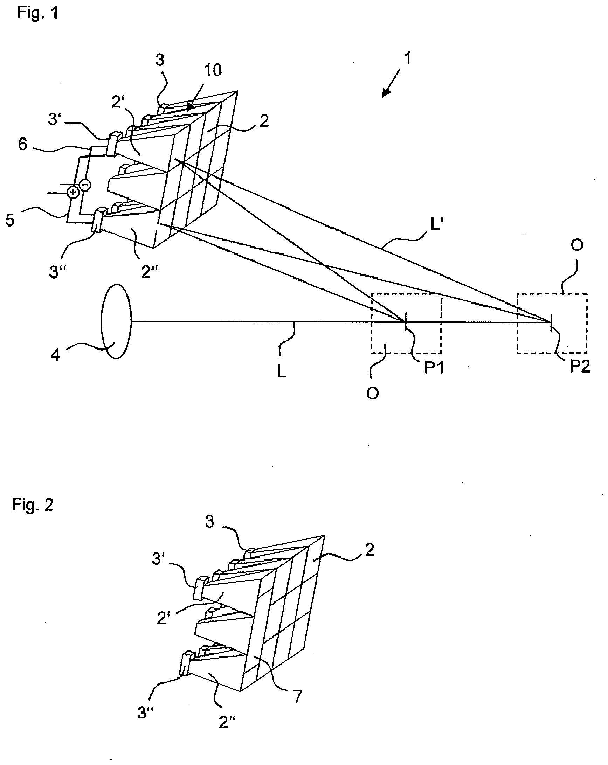

In Fig. 1 ist eine Farberfassungsanordnung 1 aus einer Farberfassungseinrichtung 10, einem zu vermessenden Objekt O und einer Lichtquelle 4 aufgebaut. Lichtstrahlen L der Lichtquelle 4 treffen auf das Objekt O, das an verschiedenen Positionen P1 und P2 vorliegen kann, und werden als reflektierte Lichtstrahlen L' zurückgeworfen. Die reflektierten Lichtstrahlen L' werden von der Farberfassungseinrichtung 10 erfasst.

Die Farberfassungseinrichtung 10 weist eine Vielzahl an Sensoren 3 auf, denen im Lichtgang lichtleitende Elemente in Form von Trichtern 2 angeordnet sind. Durch die Trichter 2 werden die reflektierten Lichtstrahlen L' gezielt auf die Sensorfläche der Farberkennungssensoren 3 gelenkt. Die Farberkennungssensoren 3 sind in einer 4x3-Matrix angeordnet, wobei nicht alle Spalten der Matrix für die Farberkennung genutzt werden. Die linke Spalte der Matrix (in Fig. 2) wird erfindungsgemäß für Abstandsmessungen verwendet. Dabei weist die Spalte einen oberen, ersten Abstandssensor 3' und einen unteren, zweiten Abstandssensor 3" auf. Der mittlere Trichter wird nicht genutzt. Diesen Sensoren ist ebenfalls jeweils ein Trichter 2', 2" zugeordnet. So dient der erste Abstandssensor 3' als "Fernsensor" und der zweite Abstandssensor 3"als "Nahsensor". Die als Abstandssensoren 3', 3" genutzten Farberkennungssensoren messen hierbei also zusammen die Abstände der Objektfläche bspw. zu den Positionen P1, P2 des Objektes O, so dass das Objekt O einmal an der Position P1 und einmal an der Position P2 vorliegt.

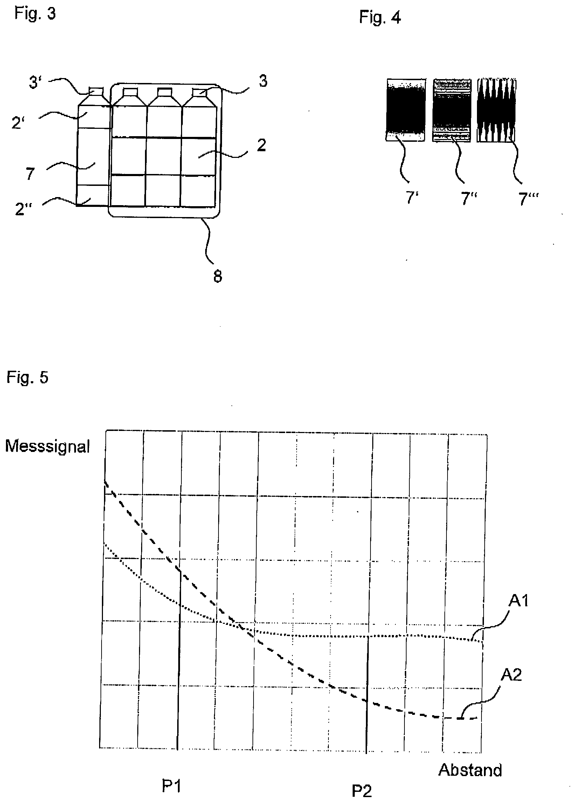

Den Farberkennungssensoren 3 und den Abstandssensoren 3', 3" ist eine auswärtige Elektronik 5 nachgeordnet. Diese ist Bestandteil der Farberfassungseinrichtung 10 nach Fig. 1, kann aber auch von ihr beabstandet angeordnet sein. In Fig. 1 ist eine Variante gezeigt, in der die gemessenen Rohsignale der Abstandssensoren 3', 3" direkt voneinander subtrahiert bzw. addiert werden können, angedeutet durch eine elektrische Leitungsverbindung 6. Die nur zur Farberfassung genutzten Farberkennungssensoren 3 sind in einer 3x3-Farbmatrix 8 zusammengefasst, wie in Fig. 3 in einer Frontansicht umrahmt. Die Farbmatrix 8 ist dabei mit neun Farbempfängern ausgestattet, wobei drei auf die Farbe rot, drei auf grün und drei auf blau verteilt sind; die Verteilung ist dabei beliebig bzw. der jeweiligen Messsituation angepasst.

Um die Abstandskennlinie, die nach **Fig. 1** erfasst wird, noch zu verbessern, zeigen **Fig. 2** und **3**, dass den Trichtern, 2', 2", die den Abstandssensoren 3', 3" zugeordnet sind, ein Grauverlaufsfilter 7 zugeordnet ist, der die abstandsspezifischen unterschiedlichen Abschaltungen der Nah- und Femsensoren 3', 3" verstärkt. Nach **Fig. 2** ist der Grauverlaufsfilter 7 derart angeordnet, dass er einen unteren Bereich des ersten Trichters 2' und einen oberen Abschnitt des zweiten Trichters 2" abdeckt.

In **Fig. 4** sind verschiedene Arten von Grauverlaufsfilter 7', 7", 7''' angezeigt, dabei ein Gradientenfilter 7', ein Streifenmuster (Filter 7") sowie ein Zackenmuster (Filter 7'''). Auch ein Raster mit Punkten mit variablen Abständen ist möglich.

Die Auswirkung des Grauverlaufsfilters 7 ist in **Fig. 5** dargestellt, wobei ein Messsignal Ober dem Abstand "Sensor-Objekt" exemplarisch aufgetragen ist. An den Positionen P1 und P2 ist jeweils das Abstandsignal einmal ohne Grauverlaufsfilter 7 (gepunktete Kurve S1) und einmal mit Grauverlaufsfilter 7 (gestrichelte Kurve S2) markiert. Es wird deutlich, dass mit einer Filterung eine Erhöhung des Messsignals und damit auch eine verbesserte Messung erreicht werden kann, da eine höhere Differenz der beiden Signale und damit eine höhere Auflösung erreicht wird.

BEZUGSZEICHENLISTE

| | |
|---|---|
| 1 | Farberfassungsanordnung |
| 2 | Trichter |
| 2', 2" | Trichter Abstandssensoren |
| 3 | Farberkennungssensoren |
| 3', 3" | Abstandssensoren |
| 4 | Lichtquelle |
| 5 | Auswerteelektronik |
| 6 | Elektrische Leitungsverbindung |
| 7 | Grauverlaufsfilter |
| 8 | Sensormatrix |
| 10 | Farberfassungseinrichtung |
| | |
| L | Lichtstrahlen |
| L' | Reflektierte Lichtstrahlen |
| O | Objekt |
| S1 | Abstandssignal ohne Filter |
| S2 | Abstandssignal mit Filter |

**Patentansprüche**

**1.** Farberfassungsanordnung (1) zum Bestimmen zumindest einer Farbe eines Objekts (O), wobei die Anordnung (1) aufweist:

- eine gerichtete Lichtquelle (4), die auf das zu erkennende Objekt (O) gerichtet ist,
- eine Auswerteelektronik (5), und
- eine Farberfassungseinrichtung (10) mit zumindest drei Farberkennungssensoren (3) zur Aufnahme von Strahlung, die von dem Objekt (O) reflektiert wird,

**wobei**
jedem Farberkennungssensor (3) ein Trichter (2) als lichtleitendes Element vorgeordnet ist,
**dadurch gekennzeichnet, dass**
die Farberkennungssensoren (3) und die Trichter (2) eine Sensor-Matrix mit vier Spalten und drei Reihen bilden, wobei zwei der Farberkennungssensoren (3) als Abstandssensoren (3', 3")
verwendet werden, und
wobei eine Spalte der Sensor-Matrix für die Abstandmessung eingerichtet ist, wobei ein oberer Trichter (2') und ein unterer Trichter (2") in der Spalte vorliegen und die von dem Objekt (O) reflektierten und von den beiden Trichtern (2', 2") aufgenommenen Lichtstrahlen (L') auf die Abstandssensoren (3', 3") geleitet werden.

**2.** Anordnung (1) nach Anspruch 1,
**dadurch gekennzeichnet, dass**
der Trichter (2) umgekehrt pyramidenstumpfförmig ist und je eine Lichteintrittsfläche und dazu gegenüberliegende Lichtaustrittsfläche aufweist, wobei die Lichteintrittsfläche größer ist als die Lichtaustrittsfläche.

**3.** Anordnung (1) nach Anspruch 1 oder 2,
**dadurch gekennzeichnet, dass**
die Trichter (2) als lichtleitende Elemente linsenfrei sind.

**4.** Anordnung (1) nach zumindest einem der Ansprüche 1 bis 3,
**dadurch gekennzeichnet, dass**
die Farberfassungseinrichtung (10) zumindest einen Grauverlaufsfilter (7) aufweist,
der den zur Abstandsmessung vorgesehenen Farberkennungssensoren (3', 3") vorgeordnet ist.

**5.** Anordnung (1) nach Anspruch 4,
**dadurch gekennzeichnet, dass**
der Grauverlaufsfilter (7) dabei so angeordnet ist, dass er einen unteren Abschnitt eines oberen, ersten Trichters (2') sowie einen oberen Abschnitt eines zweiten, unteren Trichters (2') abdeckt.

**6.** Anordnung (1) nach zumindest einem der Ansprüche 1 bis 5,
**dadurch gekennzeichnet, dass**
jeder Farberkennungssensor zumindest zwei unterschiedlich monochrome Farbaufnahmeflächen aufweist, wobei die Farbaufnahmefläche

- RGB-sensitiv, insbesondere rot-, grün- oder blausensitiv oder
- CMY-sensitiv, insbesondere cyan-, magenta-, gelbsensitiv ist.

7. Korrekturverfahren zur Korrektur einer erfassten Helligkeit eines Objekts (1) unter Verwendung einer Farberfassungsanordnung (1) nach zumindest einem der Ansprüche 1 bis 6, **umfassend die Schritte**

- Bestrahlen des Objekts mit Lichtstrahlen (L) aus der Lichtquelle (4), wobei die Lichtstrahlen (L) auf eine in Bezug zur Lichtquelle (4) zumindest eine Position (P1, P2) des Objekts (O) auftreffen;
- Bestimmen der Helligkeit an der Position (P1, P2) durch Erfassen der Intensitäten A1 und A2 der von der Position (P1 ,P2) des Objekt (O) reflektierten Lichtstrahlen (L') mit den als Abstandssensoren (3', 3") verwendeten Farberkennungssensoren und Übermitteln der Intensitäts-Informationen A1 und A2 an die Auswerteelektronik (5);
- Bilden des Differenzsignals der Signale A1 und A2 und Normieren mit der Gesamtempfangsenergie der Abstandssensoren (3', 3") mit der Auswerteelektronik und Bestimmen eines Korrekturfaktors für die Helligkeit;
- Korrigieren der bestimmten Helligkeit durch den Korrekturfaktor aus dem normierten Differenzsignal.

8. Verfahren nach Anspruch 7, **umfassend den Schritt** Vergleichen des normierten Differenzsignals mit zumindest einem Datensatz und daraus Ermitteln des Korrekturfaktors, dabei aus dem Signal Ermitteln der Empfangsenergie pro Farbkanal und Vergleichen mit vorbestimmten Datensätzen.

9. Verfahren nach Anspruch 7 oder 8, **umfassend die Schritte**

- Erzeugen des analogen Differenzsignals sowie des analogen Summensignals und
- mittels eines AD-Wandlers Wandeln der analogen Signale in digitale Signale und
- in der Auswerteelektronik (5) aus den digitalisierten Signalen Bestimmen des normierten Differenzsignals
oder
- Erfassen analoger Signale mittels der Abstandssensoren (3', 3"),
- mittels des AD-Wandlers Wandeln der analogen Signale in digitale Signale und

- in der Auswerteelektronik (5) aus den digitalisierten Signalen Bestimmen des normierten Differenzsignals.

**Claims**

1. A colour recognition arrangement (1) for determining at least one colour of an object (O), wherein the arrangement (1) comprises:

- a directional light source (4) which is directed to the object (O) to be detected,
- an evaluation electronics (5), and
- a colour recognition device (10) having at least three colour detection sensors (3) for absorbing radiation reflected by the object (O),

**wherein**
a funnel (2), being provided as a light conducting element, is arranged upstream of each colour detection sensor (3),
**characterised in that**
the colour detection sensors (3) and the funnels (2) form a sensor matrix having four columns and three rows, wherein two of the colour detection sensors (3) are used as distance sensors (3', 3"), and wherein one column of the sensor matrix is set up for distance measurement, wherein an upper funnel (2') and a lower funnel (2") are present in the column and the rays of light (L') reflected by the object (O) and absorbed by the two funnels (2', 2") are conducted to the distance sensors (3', 3").

2. The arrangement (1) according to claim 1, **characterised in that** the funnel (2) has the shape of an inverted truncated pyramid and has one light entrance surface and one opposite light exit surface, wherein the light entrance surface is larger than the light exit surface.

3. The arrangement (1) according to claim 1 or 2, **characterised in that** the funnels (2), being provided as light conducting elements, do not have any lenses.

4. The arrangement (1) according to at least any one of claims 1 to 3, **characterised in that** the colour recognition device (10) has at least one graduated neutral density filter (7) which is arranged upstream of the colour detection sensors (3', 3") that are provided for distance measurement.

5. The arrangement according to claim 4, **characterised in that** therein, the graduated neutral density filter (7) is arranged such that it covers a lower section of an upper first funnel (2') as well as an upper section of a second lower funnel (2').

6. The arrangement (1) according to at least any one of claims 1 to 5,
**characterised in that**
each colour detection sensor has at least two variably monochrome colour absorption surfaces, wherein the colour absorption surface

- is sensitive to RGB, more particularly sensitive to red, green or blue, or
- is sensitive to CMY, more particularly sensitive to cyan, magenta or yellow.

7. A correction method for correcting a recognised brightness of an object (1), using a colour recognition arrangement (1) according to at least any one of claims 1 to 6,
**comprising the steps of**

- irradiating the object with rays of light (L) from the light source (4), wherein the rays of light (L) impinge on a position (P1, P2) of the object (O), the position (P1, P2) being at least one with regard to the light source (4),
- determining the brightness at the position (P1, P2) by recognising the intensities A1 and A2 of the rays of light (L') reflected from the position (P1, P2) of the object (O), using the colour detection sensors serving as distance sensors (3', 3") and transmitting the intensity information A1 and A2 to the evaluation electronics (5),
- forming the differential signal of the signals A1 and A2 and scaling with the total receiving energy of the distance sensors (3', 3") using the evaluation electronics and determining a correction factor for the brightness,
- correcting the determined brightness from the scaled differential signal using the correction factor.

8. The method according to claim 7,
**comprising the step of**
comparing the scaled differential signal with at least one data record and determining the correction factor therefrom, therein determining from the signal the receiving energy per colour channel and comparing with predetermined data records.

9. The method according to claim 7 or 8,
**comprising the steps of**

- generating the analogue differential signal as well as the analogue sum signal and
- converting the analogue signals into digital signals by means of an analogue digital converter, and

- determining the scaled differential signal from the digitised signals in the evaluation electronics (5),
or
- recognising analogue signals by means of the distance sensors (3', 3"),
- converting the analogue signals into digital signals by means of the analogue digital converter, and
- determining the scaled differential signal from the digitised signals in the evaluation electronics (5).

**Revendications**

1. Agencement de détection de couleur (1) pour la détermination d'au moins une couleur d'un objet (O), dans lequel l'agencement (1) présente :

- une source lumineuse orientée (4) qui est orientée vers l'objet à reconnaître (O),
- une électronique d'évaluation (5), et
- un dispositif de détection de couleur (10) avec au moins trois capteurs de reconnaissance de couleur (3) pour la réception de rayonnement qui est reflété par l'objet (O),

**dans lequel**
un entonnoir (2) est disposé en amont de chaque capteur de reconnaissance de couleur (3) en tant qu'élément guidant la lumière,
**caractérisé en ce que**
les capteurs de reconnaissance de couleur (3) et les entonnoirs (2) forment une matrice de capteurs avec quatre colonnes et trois rangées, dans lequel deux des capteurs de reconnaissance de couleur (3) sont utilisés en tant que capteurs d'écart (3', 3"), et dans lequel une colonne de la matrice de capteurs est aménagée pour la mesure d'écart, dans lequel un entonnoir supérieur (2') et un entonnoir inférieur (2") sont présents dans la colonne et les rayons lumineux (L') reflétés par l'objet (O) et reçus par les deux entonnoirs (2', 2") sont dirigés sur les capteurs d'écart (3', 3").

2. Agencement (1) selon la revendication 1,
**caractérisé en ce que**
l'entonnoir (2) est en forme de pyramide tronquée inversée et présente à chaque fois une face d'entrée lumineuse et une face de sortie lumineuse opposée à celle-ci, dans lequel la face d'entrée lumineuse est supérieure à la face de sortie lumineuse.

3. Agencement (1) selon la revendication 1 ou 2,
**caractérisé en ce que**
les entonnoirs (2) sont exempts de lentille en tant qu'éléments guidant la lumière.

**4.** Agencement (1) selon au moins une des revendications 1 à 3,
**caractérisé en ce que**
le dispositif de détection de couleur (10) présente au moins un filtre dégradé gris (7) qui est disposé en amont des capteurs de reconnaissance de couleur (3', 3") prévus pour la mesure d'écart.

**5.** Agencement (1) selon la revendication 4,
**caractérisé en ce que**
le filtre dégradé gris (7) est en l'occurrence disposé de sorte qu'il recouvre une section inférieure d'un premier entonnoir supérieur (2') ainsi qu'une section supérieure d'un second entonnoir inférieur (2').

**6.** Agencement (1) selon au moins une des revendications 1 à 5,
**caractérisé en ce que**
chaque capteur de reconnaissance de couleur présente au moins deux faces de réception de couleur différemment monochromes, dans lequel la face de réception de couleur

- est sensible au RVB, notamment sensible au rouge, vert ou bleu, ou
- est sensible au CMJ, notamment sensible au cyan, magenta, jaune.

**7.** Procédé de correction pour la correction d'une clarté détectée d'un objet (1) en utilisant un agencement de détection de couleur (1) selon au moins une des revendications 1 à 6,
**comprenant les étapes de**

- irradiation de l'objet avec des rayons lumineux (L) provenant de la source lumineuse (4), dans lequel les rayons lumineux (L) sont incidents sur au moins une position (P1, P2) de l'objet (O) par rapport à la source lumineuse (4) ;
- détermination de la clarté à la position (P1, P2) par détection des intensités A1 et A2 des rayons lumineux (L') reflétés par la position (P1, P2) de l'objet (O) avec les capteurs de reconnaissance de couleur utilisés en tant que capteurs d'écart (3', 3") et transmission des informations d'intensité A1 et A2 à l'électronique d'évaluation (5) ;
- formation du signal différentiel des signaux A1 et A2 et normalisation avec l'énergie de réception totale des capteurs d'écart (3', 3") avec l'électronique d'évaluation et détermination d'un facteur de correction pour la clarté ;
- correction de la clarté déterminée par le facteur de correction à partir du signal différentiel normalisé.

**8.** Procédé selon la revendication 7,
**comprenant l'étape de**
comparaison du signal différentiel normalisé à au moins un ensemble de données et détermination du facteur de correction à partir de celle-ci, détermination de l'énergie de réception par canal de couleur en l'occurrence à partir du signal et comparaison à des ensembles de données prédéterminés.

**9.** Procédé selon la revendication 7 ou 8,
**comprenant les étapes de**

- génération du signal différentiel analogique ainsi que du signal cumulé analogique et
- conversion des signaux analogiques en signaux numériques au moyen d'un convertisseur AN, et
- détermination du signal différentiel normalisé à partir des signaux numérisés dans l'électronique d'évaluation (5)
ou
- détection de signaux analogiques au moyen des capteurs d'écart (3', 3"),
- conversion des signaux analogiques en signaux numériques au moyen du convertisseur AN, et
- détermination du signal différentiel normalisé à partir des signaux numérisés dans l'électronique d'évaluation (5).

Fig. 1

Fig. 2

Fig. 3

Fig. 4

3'
2'
7
2"

3
2

8

7'  7"  7'"

Fig. 5

Messsignal

A1

A2

Abstand

P1

P2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120188419 A1
- US 2004222362 A1
- US 5831740 A
- DE 10016349 B4